# EUROPEAN PATENT SPECIFICATION

(11) **EP 1 503 130 B1**
(45) Date of publication and mention of the grant of the patent: **07.10.2009**
(21) Application number: 04103664.1
(22) Date of filing: 29.07.2004
(51) Int. Cl.: F16L 21/02, F16L 21/06

(54) **Device for tight coupling with thermal decoupling**
Druckdichte Kupplungsvorrichtung mit thermischer Entkopplung
Dispositif de raccordement étanche comportant un découplage thermique

(30) Priority: 29.07.2003 FR 0309349
(43) Date of publication of application: 02.02.2005
(73) Proprietor: Mark IV Systemes Moteurs (Société Anonyme), 92400 Courbevoie (FR)
(72) Inventor: Vetois, Jacques, 67120 Duttlenheim (FR)
(74) Representative: Nuss, Laurent

(56) References cited:
- DE-A- 19 833 302
- US-A- 5 137 308
- US-A1- 2003 047 942

## Description

The present invention relates to the field of tight couplings and connections between conduits, in particular in an environment of high temperatures and vibrations, ensuring the preservation of the seal. It relates to a tight coupling device with thermal decoupling of a conduit to a head.

In certain applications it is necessary to connect a conduit made of a given material, in particular thermoplastic, to a head or another portion of conduit subjected to high temperatures, greater than the softening temperature of the material forming the said first named conduit.

There is therefore cause to carry out in the region of the coupling interface both a sealing function and a tight coupling function.

Such is particularly the case when connecting a feed conduit made of a thermoplastic material to a turbocharger of a supercharging system for an engine.

Currently the generally accepted solution consists in providing a moulded connection piece having improved resistance to high temperatures and fitted with a toric seal.

This moulded piece/seal unit is press-fitted on the feed head of the turbocharger, the fitted assembly then being locked by a clamping screw. Such an assembly is shown in DE 19 833 302.

The object of the present invention is to overcome the drawbacks of this known solution and provide a new solution avoiding the need to use a particular moulded connection piece and allowing easier assembly, in particular with a limited force for assembly by fitting.

For this purpose, the present invention relates to a device for coupling or connecting, with thermal decoupling, a circular section conduit, in particular made of a thermoplastic material, to a head of appropriate form, in particular made of a metallic material, by partially fitting an said end portion to lock said connection, characterised in that said end portion has an at least slightly flexible constitution, with preferably a flexible deformation capacity distributed uniformly over the circumference of said end portion, in that the clamp collar comprises an elastic compression reserve, and in that a seal with a tubular structure made of a fluorocarbon elastomer, for example FPM is placed between said sealing portion of the conduit and the head, being arranged in a substantially centred manner in relation to said clamp collar, and being applied to the head at the time of the clamping of the end portion.

A clearer understanding of the invention will be facilitated by the description below, which relates to a preferred embodiment given by way of a non-limiting example and explained with reference to the accompanying schematic drawings, in which:
Figure 1 is a cross-section of the assembly device according to the invention prior to assembly and clamping;

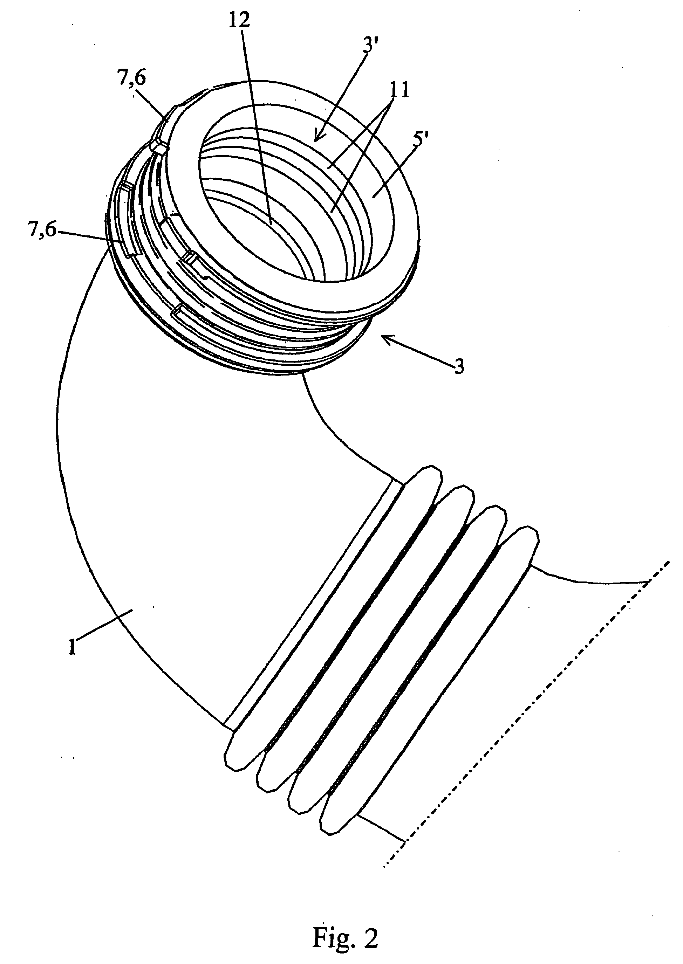

Figure 2 is a perspective view of the conduit end portion provided with a clamp collar shown in Figure 1, and,

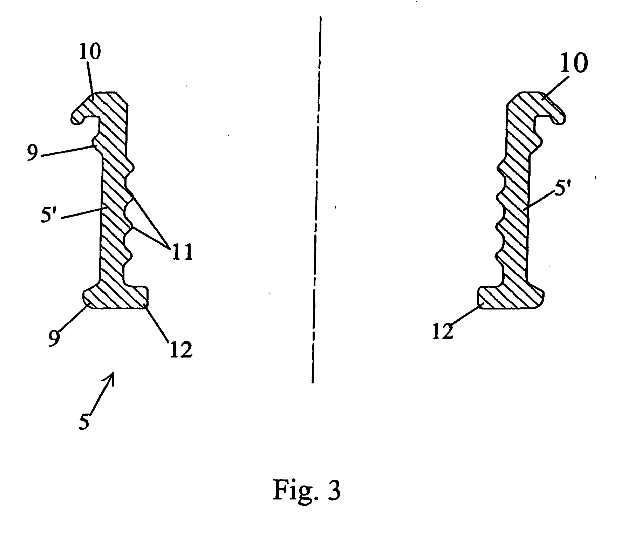

Figure 3 is a cross-section of a seal forming part of the device of Figure 1.

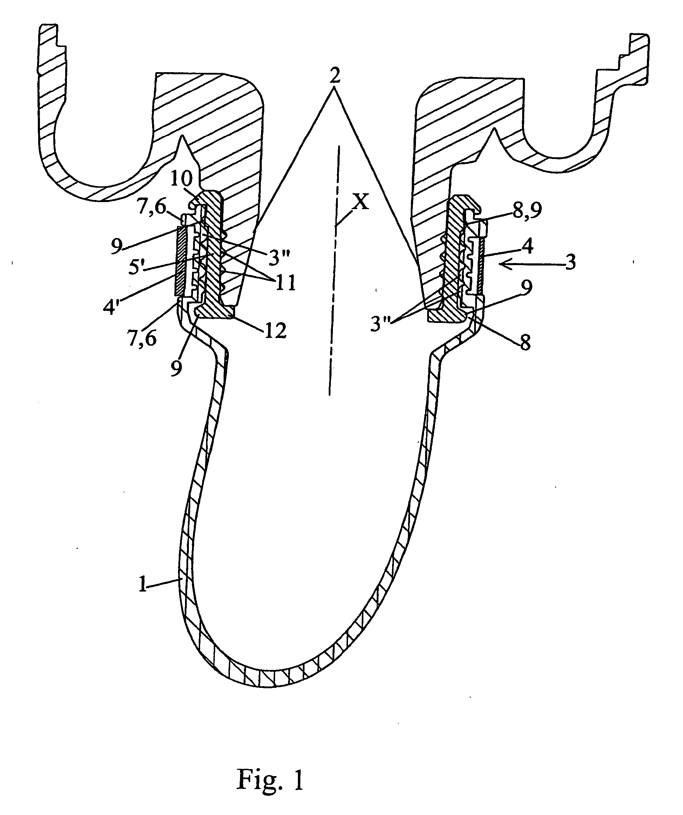

Figure 1 of the accompanying drawings shows a device for coupling or connecting, with thermal decoupling, a circular section conduit 1, in particular made of a thermoplastic material, to a head 2 of appropriate form, in particular made of a metallic material, by partially fitting an end portion 3 of said conduit 1 onto said head 2, a clamp collar 4 being placed on the external face of said end portion 3 to lock said connection.

According to the invention said end portion 3 has an at least slightly flexible constitution, with preferably a flexible deformation capacity distributed uniformly over the circumference of said end portion 3. Furthermore, the clamp collar 4 comprises an elastic compression reserve 4' and a seal 5 with a tubular structure made of a fluorocarbon elastomer of the type known as FPM is placed between said seal portion 3 of the conduit and the head 2, being arranged in a substantially centred manner in relation to said clamp collar 4 and being applied to the head 2 at the time of the clamping of the end portion 3.

By making the end portion 3 from a flexible material, preferably the same material as that of which the rest of the conduit 1 is made (1 and 3 forming a single piece), for example PEEST (or HYTREL, registered name), deformation may be distributed uniformly, facilitating in particular, in cooperation with the clamp 4 for elastic reserve 4', correction of dimensional variations caused by variations in temperature.

The conduit 1 with its end portion 3, is made as a single piece, for example by injection moulding/blowing, and the particular qualities of the material from which the seal 5 is made give this seal a high thermal decoupling capacity, said decoupling applying to all of the part of the end portion 3 in immediate proximity to the head 2 by virtue of the tubular shape of the body 5' of said seal 5.

In order to ensure that the collar 4 is simultaneously levelled and supported on the end portion 3, and that the seal 5 is also levelled and supported in said end portion, the wall of the end portion 3 may advantageously comprise two circumferential deformations 6, which may or may not be continuous, located in two mutually parallel planes perpendicular to the longitudinal central axis of said portion 3. These deformations form ribs 7 on the exterior face of said portion and grooves or slots 8 on its inner face, and the seal 5 comprises two exterior peripheral ribs 9 intended to be accommodated respectively in said grooves or slots 8 when said seal 5 is fitted in said end portion 3.

One of said slots 8 may be formed, for example, by a recessed wall zone of the conduit 1 between its tubular body and its end portion 3.

In order to form an effective tightness between the seal 5 and the wall of the end portion 4, said seal 5 may comprise in the region of its longitudinal edge, located after assembly in the region of the orifice 3' of the end portion 3 of the conduit 1, an exterior circumferential lip 10 inclined in the direction of the longitudinal edge opposite said seal 5. This lip 10 is hook-shaped in section and grips intimately onto the free edge of the conduit 1 in order to ensure that the tubular seal 4 is fastened to this conduit.

According to a characteristic of the invention and with a view to ensuring effective coupling and an improved tightness between the seal 5 and the exterior face of the head 2, the tubular body 5' of the seal 5 may comprise on its interior face a plurality of parallel circumferential circular ribs 11, spaced out from one another in the longitudinal direction of said body 5'.

The exterior face of the head 2 may optionally comprise grooves to receive said ribs 11.

In a variation or in addition to the ribs 11, it may be provided that the wall of the end portion 3 comprises ribs 3" on its internal face, obtained, for example, by deformation of said wall and located, if necessary, opposite the internal ribs 11 of the tubular seal 5.

According to another characteristic of the invention it may be provided furthermore that the tubular body 5' of the seal 5 comprises in the region of its longitudinal edge, located after assembly at a distance from the orifice 3' of the end portion 3 of the conduit 1, an internal circular radial rib 12 intended to form a stop (in the longitudinal direction) for the head 2 inserted in said end portion 3 of the conduit 1.

Furthermore, the radially protruding shape of the rib 12 allows it to cover the free edge of the head 2 and therefore, in conjunction with the particular properties of the material (FPM) from which the tubular seal 5 is made, causes a thermal decoupling against the thermal radiation emitted by said head 2.

In an advantageous way, the elastic compression reserve 4' consists of a segment of an undulating leaf spring installed between the clamp band of the collar 4 and a leaf or plate part forming a support base fastened at its two ends to said band.

The clamp collar 4 used may, for example, be of the type sold by the company NORMA.

The present invention also relates to a supercharging system for an internal combustion engine comprising, in particular, a turbocharger comprising an air intake or an air-and-petrol mixture intake head and an air or an air-and-petrol mixture feed conduit, connected to said head in the region of an outflow end portion, characterised in that the coupling or connection of the conduit 1 to the head 2 is realised via a coupling device as described above.

The invention is obviously not limited to the embodiment described and illustrated in the accompanying drawings. Modifications remain possible, in particular from the point of the view of the constitution of the various elements or through substitution of technical equivalents without thereby departing from scope of protection of the invention.

## Claims

1. Device for coupling or connecting, with thermal decoupling, a circular section conduit, in particular made of a thermoplastic material, to a head of appropriate form, in particular made of a metallic material, by partially fitting an end portion of said conduit onto said head, a clamp collar being placed on the external face of said end portion to lock said connection, **characterised in that** said end portion (3) has an at least slightly flexible constitution, with preferably a flexible deformation capacity distributed uniformly over the circumference of said end portion (3), **in that** the clamp collar (4) comprises an elastic compression reserve (4'), and **in that** a seal (5) with a tubular structure made of a fluorocarbon elastomer is placed between said end portion (3) of the conduit (1) and the head (2), being arranged in a substantially centred manner in relation to said clamp collar (4), and being applied to the head (2) when the end portion (3) is clamped.

2. Coupling device according to claim 1, **characterised in that** the wall of the end portion (3) comprises two circumferential deformations (6), which may or may not be continuous, located in two mutually parallel planes perpendicular to the longitudinal central axis of said portion (3), **in that** these deformations form ribs (7) on the exterior face of said portion and grooves or slots (8) on its inner face, and **in that** the seal (5) comprises two exterior peripheral ribs (9) intended to be accommodated respectively in said grooves or slots (8) when said seal (5) is fitted in said end portion (3).

3. Coupling device according to any one of claims 1 and 2, **characterised in that** the seal (5) comprises, in the region of its longitudinal edge located after assembly in the region of the orifice (3') of the end portion (3) of the conduit (1), an exterior circumferential lip (10) inclined in the direction of the longitudinal edge opposite said seal (5).

4. Coupling device according to any one of claims 1 to 3, **characterised in that** the tubular body (5') of the seal (5) comprises on its interior face a plurality of parallel circumferential circular ribs (11), spaced from one another in the longitudinal direction of said body (5').

5. Coupling device according to any one of claims 1 to 4, **characterised in that** the wall of the end portion (3) comprises ribs (3") on its internal face, obtained, for example, by deformation of said wall and located, if necessary, opposite the internal ribs (11) of the tubular seal (5).

6. Coupling device according to any one of claims 1 to 5, **characterised in that** the tubular body (5') of the seal (5) comprises, in the region of its longitudinal edge, located after assembly at a distance from the orifice (3') of the end portion (3) of the conduit (1), an internal circular radial rib (12) intended to form a stop for the head (2) inserted in said end portion (3) of the conduit (1).

7. Coupling device according to any one of claims 1 to 6, **characterised in that** the elastic compression reserve (4') consists of a segment of an undulating leaf spring assembled between the band of the clamp collar (4) and a leaf or plate part forming a support base fastened at its two ends to said band.

8. Supercharging system for an internal combustion engine comprising, in particular, a turbocharger comprising an air-intake or an air-and-petrol-mixture-intake head and an air or an air-and-petrol-mixture feed conduit, connected on said head in the region of an outflow end portion, **characterised in that** the coupling or connection of the conduit (1) to the head (2) is realised via a coupling device according to any one of claims 1 to 7.

## Patentansprüche

1. Vorrichtung zum Anschließen oder Verbinden, mit thermischer Entkoppelung, eines ringförmigen Leitungsabschnitts, der insbesondere aus einem thermoplastischen Material hergestellt ist, mit einem Kopf, der eine geeignete Form aufweist und insbesondere aus einem metallischen Material hergestellt ist, durch teilweises Anfügen eines Endbereichs des Leitungsabschnittes auf den Kopf, wobei eine Befestigungsschelle auf die Außenfläche des Endbereichs gelegt wird, um diesen Anschluss zu sichern, **dadurch gekennzeichnet, dass** der Endabschnitt (3) zumindest eine leicht flexible Eigenschaft aufweist, bevorzugt mit einer gleichmäßig um den Umfang des Endbereichs (3) verteilten flexiblen Deformationskapazität, dass die Befestigungsschelle (4) eine elastische Kompressionsreserve (4') aufweist, und dass eine Dichtung (5) mit einer schlauchförmigen Struktur aus Fluorokarbonelastomer zwischen dem Endabschnitt (3) des Leitungsabschnittes (1) und dem Kopf (2) angeordnet ist, die im Wesentlichen in Bezug auf die Befestigungsschelle (4) zentriert ist und auf dem Kopf (2) angeordnet wird, wenn der Endabschnitt (3) befestigt wird.

2. Verbindungsvorrichtung nach Anspruch 1, **dadurch gekennzeichnet, dass** die Wand des Endbereichs (3) zwei umfängliche Umformungen (6) aufweist, welche kontinuierlich sein können oder nicht kontinuierlich sein können und in zwei im Wesentlichen parallelen Ebenen, welche senkrecht auf der longitudinalen Mittelachse des Endbereichs (3) liegen, angeordnet sind, dass die Umformungen Rippen (7) auf der Außenseite des Endbereichs und Kerben oder Schlitze (8) auf ihrer Innenfläche ausbilden, und dass die Dichtung (5) zwei außenliegende periphere Rippen (9) aufweist, die dazu vorgesehen sind, korrespondierend in den Kerben oder Schlitzen (8) aufgenommen zu werden, wenn die Dichtung (5) in dem Endabschnitt (3) angeordnet wird.

3. Verbindungsvorrichtung nach einem der Ansprüche 1 und 2, **dadurch gekennzeichnet, dass** die Dichtung (5) im Bereich ihrer longitudinalen Kante, welche nach dem Zusammenbau im Bereich der Öffnung (3') des Endbereichs (3) des Leitungsabschnittes (1) liegt, eine außenliegende umlaufende Lippe (10) aufweist, welche in der Richtung der longitudinalen Kante gegenüber von dem Siegel (5) eingekerbt ist.

4. Verbindungsvorrichtung nach einem der Ansprüche 1 bis 3, **dadurch gekennzeichnet, dass** der röhrenförmige Abschnitt (5') der Dichtung (5) auf seiner Innenfläche eine Mehrzahl von parallelen umlaufenden ringförmigen Rippen (11) aufweist, die voneinander in Richtung der longitudinalen Richtung des röhrenförmigen Abschnittes (5') beabstandet sind.

5. Verbindungsvorrichtung nach einem der Ansprüche 1 bis 4, **dadurch gekennzeichnet, dass** die Wand des Endbereichs (3) auf seiner Innenfläche Rippen (3") aufweist, welche beispielsweise durch Einkerbung der Wand bereitgestellt sind, und falls notwendig, gegenüber von den internen Rippen (11) der röhrenförmigen Dichtung (5) angeordnet sind.

6. Verbindungsvorrichtung nach einem der Ansprüche 1 bis 5, **dadurch gekennzeichnet, dass** der röhrenförmige Körper (5') der Dichtung (5) im Bereich seiner longitudinalen Kante, welche nach der Montage von der Öffnung (3') des Endbereichs (3) des Leitungsabschnitts (1) beabstandet angeordnet ist, eine interne ringförmige radiale Rippe (12) aufweist, welche vorgesehen ist, um einen Endanschlag für den in den Endabschnitt (3) des Leitungsabschnitts (1) eingeführten Kopf (2) bereitzustellen.

7. Verbindungsvorrichtung nach einem der Ansprüche 1 bis 6, **dadurch gekennzeichnet, dass** die elastische Kompressionsreserve (4') aus einem Abschnitt einer wellenförmigen Blattfeder gebildet ist, die zwischen dem Band der Befestigungsschelle (4) und einem Blatt- oder Tellerteil angeordnet ist, welcher eine Stützfläche ausbildet, die an ihren zwei Enden mit dem Band befestigt ist.

8. Turboladervorrichtung für eine Verbrennungskraftmaschine, insbesondere aufweisend einen Turbolader, der einen Lufteinlass- oder einen Luftkraftstoffgemischeinlasskopf und eine Luft- oder eine Luftkraftstoffgemischzuführleitung aufweist, im Bereich eines Ausströmungsendbereichs mit dem Kopf verbunden, **dadurch gekennzeichnet, dass** die Verbindung oder der Anschluss des Leitungsabschnitts (1) mit dem Kopf (2) durch eine Verbindungsvorrichtung nach einem der Ansprüche 1 bis 7 gewährleistet ist.

## Revendications

1. Dispositif de raccordement ou de branchement avec découplage thermique d'un conduit à section circulaire, notamment en un matériau thermoplastique, sur un embout de forme adaptée, notamment en un matériau métallique, par emmanchement partiel d'une portion d'extrémité dudit conduit sur ledit embout, un collier de serrage étant rapporté sur la face externe de ladite portion d'extrémité pour verrouiller ledit branchement, **caractérisé en ce que** ladite portion d'extrémité (3) présente une constitution au moins légèrement flexible, avec préférentiellement une capacité de déformation flexible répartie uniformément sur la circonférence de ladite portion d'extrémité (3), **en ce que** le collier de serrage (4) comporte une réserve de compression élastique (4') et **en ce qu'**un joint d'étanchéité (5) à structure tubulaire en un élastomère fluoro-carboné est rapporté entre ladite portion d'étanchéité (3) du conduit (1) et l'embout (2), en étant disposé de manière sensiblement centrée par rapport audit collier de serrage (4) et en étant plaqué sur l'embout (2) lors du serrage de la portion d'extrémité (3).

2. Dispositif de raccordement selon la revendication 1, **caractérisé en ce que** la paroi de la portion d'extrémité (3) comporte deux déformations circonférentielles (6), continues ou non, situées dans deux plans parallèles entre eux et perpendiculaires à l'axe central longitudinal de ladite portion (3), **en ce que** ces déformations constituent des nervures (7) sur la face extérieure de cette dernière et des rainures ou des gorges (8) sur sa face intérieure et **en ce que** le joint d'étanchéité (5) comporte deux nervures périphériques extérieures (9), destinées à venir se loger respectivement dans lesdites rainures ou gorges (8) lors du montage dudit joint (5) dans ladite portion d'extrémité (3).

3. Dispositif de raccordement selon l'une quelconque des revendications 1 et 2, **caractérisé en ce que** le joint d'étanchéité (5) comporte, au niveau de son bord longitudinal situé, après montage, au niveau de l'ouverture (3') de la portion d'extrémité (3) du conduit (1), une lèvre circonférentielle extérieure (10) inclinée en direction du bord longitudinal opposé dudit joint (5).

4. Dispositif de raccordement selon l'une quelconque des revendications 1 à 3, **caractérisé en ce que** le corps tubulaire (5') du joint d'étanchéité (5) comporte, sur sa face intérieure, une pluralité de nervures circulaires circonférentielles parallèles (11), mutuellement espacées dans la direction longitudinale dudit corps (5').

5. Dispositif de raccordement selon l'une quelconque des revendications 1 à 4, **caractérisé en ce que** la paroi de la portion d'extrémité (3) comporte des nervures (3") sur sa face interne, obtenues par exemple par déformation de ladite paroi et situées, le cas échéant, en regard des nervures (11) internes du joint tubulaire (5).

6. Dispositif de raccordement selon l'une quelconque des revendications 1 à 5, **caractérisé en ce que** le corps tubulaire (5') du joint d'étanchéité (5) comporte, au niveau de son bord longitudinal situé, après montage, à distance de l'ouverture (3') de la portion d'extrémité (3) du conduit (1), une nervure radiale circulaire interne (12) destinée à former butée pour l'embout (2) emmanché dans ladite portion d'extrémité (3) de conduit (1).

7. Dispositif de raccordement selon l'une quelconque des revendications 1 à 6, **caractérisé en ce que** la réserve élastique de compression (4') consiste en un segment de lame ressort ondulée montée entre la bande de serrage du collier (4) et une partie de lame ou de plaque formant embase d'appui fixée à ses deux extrémités à ladite bande.

8. Système de suralimentation pour moteur à combustion interne comprenant notamment un turbocompresseur comportant un embout d'aspiration d'air ou d'un mélange air/carburant et un conduit d'alimentation en air ou en un mélange air/carburant, raccordé sur ledit embout au niveau d'une portion d'extrémité de sortie, **caractérisé en ce que** le raccordement ou le branchement du conduit (1) sur l'embout (2) est réalisé par l'intermédiaire d'un dispositif de raccordement selon l'une quelconque des revendications 1 à 7.
